Europäisches Patentamt

European Patent Office

Office européen des brevets

(19)

(11) Publication number: **0 174 748**
**B1**

(12) **EUROPEAN PATENT SPECIFICATION**

(45) Date of publication of patent specification: **28.12.88**

(51) Int. Cl.⁴: **F 15 B 5/00, G 01 D 5/44**

(21) Application number: **85305775.0**

(22) Date of filing: **14.08.85**

(54) Position transmitters.

(30) Priority: **10.09.84 US 649246**

(43) Date of publication of application:
**19.03.86 Bulletin 86/12**

(45) Publication of the grant of the patent:
**28.12.88 Bulletin 88/52**

(84) Designated Contracting States:
**DE FR GB IT**

(56) References cited:
**US-A-3 482 588**
**US-A-3 986 526**

(73) Proprietor: **THE BABCOCK & WILCOX
COMPANY**
**1010 Common Street P.O. Box 60035**
**New Orleans Louisiana 70160 (US)**

(72) Inventor: **Smith, Jane E.**
**8252 Findley Drive**
**Mentor Ohio 44060 (US)**
Inventor: **Sampson, Raymond J.**
**18021 Midvale Avenue**
**Cleveland Ohio 44135 (US)**

(74) Representative: **Cotter, Ivan John et al**
**D. YOUNG & CO. 10 Staple Inn**
**London WC1V 7RD (GB)**

Courier Press, Leamington Spa, England.

**Description**

This invention relates to position transmitters for generating signal corresponding to the position of a movable member and, more particularly, to control systems incorporating such transmitters.

Several methods have been proposed in the past for determining the position of an actuated device such as a piston or mechanical drive unit. These methods involve sensing the position of an element of the actuator device and transmitting this position back to a system controller for controlling the device. One of the more basic methods utilises a variable resistive element, such as a slide wire or potentiometer. The variable resistive element has a constant voltage applied to it and its slider or wiper is linked mechanically to the actuator device. By moving the slider, a variable voltage is generated between the wiper and one side of the resistive element. This variable voltage corresponds to the position of the device. The variable voltage is transmitted to the system controller.

A more sophisticated method utilizes a so-called linear variable differential transformer (LVDT) or rotary variable differential transformer (RVDT) as a position sensing element. Interface circuitry converts a variable signal of the LVDT or RVDT to a corresponding current signal, which is normally a 4—20 mA signal. This signal is transmitted to the system controller.

A potentiometer has also been used as a postion sensing element with interface circuitry providing the variable current signal.

US Patent No. US—A—3 482 588 discloses a control system comprising:

an electro-pneumatic converter having pneumatic means for providing a variable pneumatic signal;

a power supply;

a system controller connected to the power supply and connected to the electro-pneumatic converter for controlling the converter; and

a position transmitter connected to a movable member for generating a signal corresponding to the position of the movable member.

The present invention provides a control system as just defined, characterised in that:

the system comprises an actuator device, said movable member being a movable member of the actuator device;

an input line of the position transmitter is connected to one terminal of the power supply;

an output line of the position transmitter is connected to another terminal of the power supply via the system controller, which has a resistive load;

the electro-pneumatic converter is connected to receive power from the system controller and is connected to apply said variable pneumatic signal to the actuator device for controlling the actuator device; and

the position transmitter comprises:

voltage divider means connected between the input and output lines and having a movable contact mechanically engaged or engageable with the movable member of the actuator device for carrying a voltage which varies with motion of the movable member,

a zero adjust amplifier having an input connected to the movable contact for receiving the voltage carried by the movable contact, the zero adjust amplifier having an output and being connected to influence a current on the output line, and the zero adjust amplifier also having an adjustable input, the movable contact being movable to a zero position corresponding to a zero position of the movable member and the adjustable input being adjusted or adjustable to apply a low selected current signal to the output line which is indicative of a zero position of the movable member,

a span adjust amplifier having an input connected to an output of the zero adjust amplifier, the span adjust amplifier having an output and being connected to influence a current on the output line, the span adjust amplifier also having an adjustable input, the movable contact being movable to a maximum position corresponding to a maximum position of the movable member and the adjustable input of the span adjust amplifier being adjusted or adjustable to apply a high selected current signal to the output line which is indicative of the maximum position of the movable member, and

a voltage-to-current stage connected between the input and output lines and connected to the output of the span adjust amplifier for converting a voltage signal from the span adjust amplifier to a current signal on the output line.

The movable contact of the voltage divide means (e.g. in the form of a potentiometer) carries a voltage that varies with movement of the contact and thus with movement of the movable member of the actuator device. (The actuator device may be a positioning device in a positioner). To set up the system, the movable member of the actuator device is moved to its zero or starting position. This simultaneously moves the movable contact to a zero position. Once at this zero position, the adjustable input of the zero adjust amplifier is moved until a low selected signal has been applied to the output line. (This is generally, for example, a 4 mA signal for a 4—20 mA signal line). The movable member of the actuator device is then moved to its maximum position, thus moving the movable contact to a maximum position and the output signal of the span adjust amplifier is changed, using the adjustable input of this amplifier, to apply a selected high signal to the output line. (This is generally, for example, a 20 mA signal). In use, the voltage-to-current stage converts the variable voltage to a variable current applied to the output line. The voltage-to-current stage may be formed by a transistor having a base controlled by an amplifier which amplifies the signal representing a difference between a resistance on the input line and the output of the span adjust amplifier.

A preferred embodiment of the invention described hereinbelow provides a cost-effective, reliable method of sensing and transmitting the position of the movable member of the actuating device. Virtually non-interacting zero and span or full scale adjustment is provided, for ease of calibration. The position transmitter readily provides for calibration between a zero position and a maximum position of the actuator device actuated by the converter.

The preferred position transmitter is simple in design, rugged in construction and economical to manufacture.

The invention will now be further described, by way of illustrative and non-limiting example, with reference to the accompanying drawings, in which:

Figures 1A and 1B together form a schematic diagram of a control system embodying the invention;

Figure 2 is a block diagram illustrating a positioner embodying the invention; and

Figure 3 is a stylised representation of an electro-pneumatic converter of a system embodying the invention.

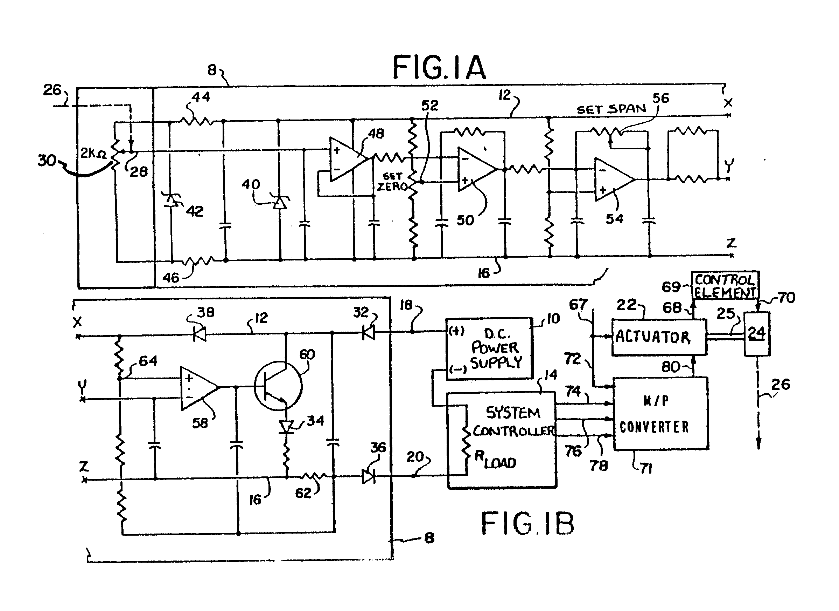

Figure 1A and 1B represent the circuit of a control system incorporating a position transmitter 8 which utilises power from a *dc* power supply 10. The power supply 10 has a positive pole or terminal which is connected to an input line 12 and a negative pole or terminal which is connected, through a system controller 14, to an output line 16. The input line 12 terminates at an input or input terminal 18 and the output line 16 terminates at an output or output terminal 20.

The system controller 14 includes a load resistor shown as $R_{LOAD}$ and controls an actuator or actuator device 22. The actuator 22 includes a movable member which is schematically shown at 24. The movable member 24 of the actuator device 22 is connected over a mechanical feedback shaft 25 shown schematically in a box in Figure 1A. This is mechanically linked over a mechanical linkage 26 to a wiper 28 of a position sensing element in the form of a potentiometer 30. The wiper 28, which forms a movable contact, thus moves with the movable member 24 of the actuator device 22 and forms a mechanical input to the position transmitter.

(It is to be noted that the circuit of Figures 1A and 1B is connected at points X, Y and Z).

The input 18 of the transmitter circuitry is at the positive side of the power supply 10. The power supply 10 can provide a voltage range of from 12 volts to 42 volts *dc*. The selection of a proper power supply voltage is dependent on the load resistor $R_{LOAD}$. The resistor converts the variable current produced at the output 20 to a variable voltage. As an example, if the load resistor $R_{LOAD}$ is 600 ohms, the maximum voltage drop across it would be 12 volts *dc*. The voltage differential between the input 18 and the output 20 is conservatively specified to be 12 volts *dc*. Adding these voltages together leads to the result that the power supply 10 must provide 24 volts *dc* to the input 18.

The circuit includes signal diodes 32, 34, and 36 which are used to protect against reverse polarity, i.e. accidental reversal of the power supply connections. A current regulator 38, also in the form of a diode, prevents the circuitry from consuming more than 4 mA. This keeps an incorrect current signal from being generated. A power supply for the circuitry is produced by a Zener diode 40 (Figure 1A) which is nominally 6.4 volts *dc*.

The position sensing element formed by the potentiometer 30 which is mechanically coupled to the mechanical feedback shaft 25 is, for example, a 2 kilohm potentiometer. A 1.2 V (nominal) Zener diode 42 is connected across the potentiometer 30, that is between the input line 12 and the output line 16. This is to provide immunity against power supply variation effects. Two 2.32 kilohm resistors 44 and 46 are used in the input and output lines 12 and 16, respectively, as voltage dividers. They act also as current limiters for the Zener diode 42 and the potentiometer 30.

The wiper 28 of the potentiometer 30 provides an input to a buffer amplifier 48 which has a variable voltage output that is connected to a zero-adjust amplifier 50. The zero-adjust amplifier 50 uses a variable offset (or bias) voltage produced by a 50 kilohm potentiometer 52. The potentiometer 52 is connected across the input and output lines 12 and 16 and is used to trim the output of the zero adjusting amplifier 50 such that a 4 mA current signal is produced at the output 20. The range of the offset voltage is such that the wiper 28 (of the potentiometer 30) can be set at almost any resistive value and a 4 mA signal can still be produced at the output 20.

A "zero value" is established by setting the potentiometer wiper 28 at a minimum value which corresponds to a "zero position" of the movable member 24 in the actuator device 22. Once this is done, the potentiometer 52 is adjusted so that the voltage output from the amplifier 50 produces a 4 mA signal on the output 20. Any increase in voltage produced by the potentiometer wiper by moving it in one direction causes a larger current signal to be seen at the output 20. The potentiometer 30 can be assumed to be a rotary potentiometer and the direction of rotation for increasing the output signal can be clockwise, for example.

The maximum scale or span of the position transmitter 8 is set by turning the wiper 28 to its maximum value corresponding to a maximum position for the movable member 24 of the actuator device 22. The output voltage of the zero adjust amplifier 50 is gained up or increased by a span adjust amplifier 54 to produce a 20 mA signal at the output terminal 20. This is done using a 50 kilohm potentiometer 56 connected in a feedback loop of the span adjust amplifier 54.

A final stage of the circuit is a voltage-to-current conversion circuit formed by a driver amplifier 58 which has an input connected to an output of the amplifier 54 and an output connected to the base of a transistor 60. The final stage includes a monitoring resistor 62 connected through the diode 36 to the output terminal 20. The driver amplifier 58 compares the output voltage of the span adjust amplifier 54 to a variable set point voltage at a junction 64. This variable set point voltage changes as the current through the monitoring resistor 62 increases or decreases. The output voltage produced by the driver amplifier 58 is just enough to operate the output transistor 60 in the active region. As this output voltage increases, the output transistor 60 is turned on more, which allows more collector current to flow. When the output voltage decreases, the transistor 60 begins to turn off, thus allowing less current to be outputted.

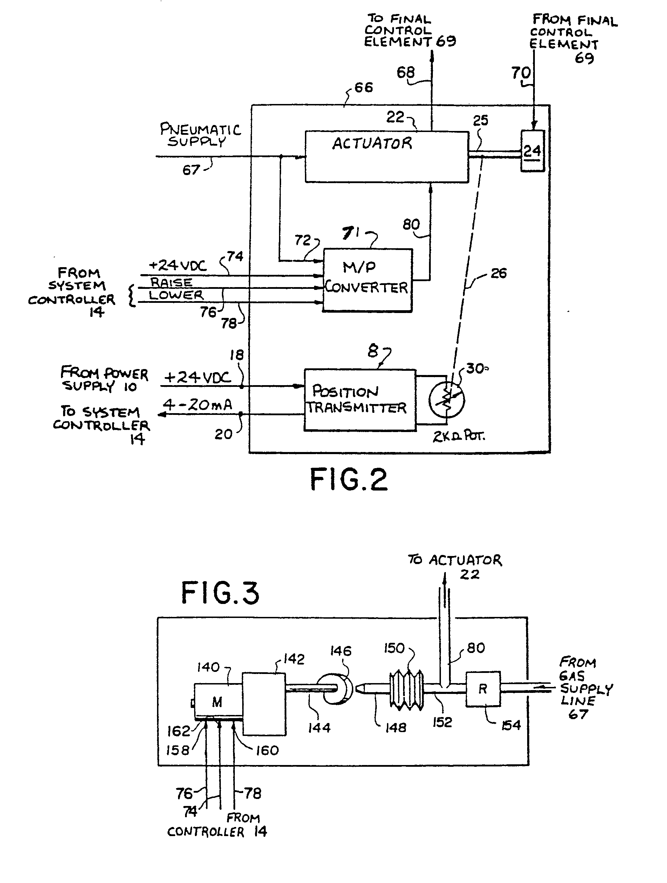

Referring to Figure 2, the above-described control system incorporating the position transmitter 8 is advantageously implemented as a positioning device 66 which includes a basic positioner which is, for example, a positioner designated the AP4 pneumatic positioner available from Bailey Controls Company, a division of The Babcock & Wilcox Company, a McDermott Company. This positioner can be utilised as the actuator 22 and has the mechanical feedback shaft 25 which can be mechanically coupled over gears or other mechanical connections 26 to the potentiometer 30. The potentiometer 30 is shown connected to the position transmitter 8 whose circuitry is illustrated in Figures 1A and 1B.

The actuator device 22 is connected to a static supply line 67 for supplying pressurized gas to the actuator and to an output line 68 connected to a final control element 69, such as an air motor (not shown). The control element 69 is mechanically linked over a mechanical linkage 70 to the movable member 24.

The position transmitter 8 has its potentiometer 30 controlled by the mechanical linkage 26 and outputs a 4 to 20 mA signal on the output terminal 20 to the system controller 14. The position transmitter 8 receives power from the input terminal 18.

The M/P converter, which is an electro-pneumatic converter, receives pressurised gas over a line 72 connected to the supply line 67, and electrical power over a line 74. The converter 71 is connected to a raise line 76 and a lower line 78 which are selectively utilised by the system controller 14 shown in Figure 1B. In practice, a motor is incorporated in the converter 71 and rotates in one direction to increase the pressure of gas leaving the converter 71 on a line 80 when a signal is applied to the raise line 76. By connecting the lower line 78 to a common terminal, the motor shaft rotates in an opposite direction decreasing the pressure on the line 80. The pressure on the line 80 is generally between 20.7 and 103.4 kPa (3 and 15 lbf/in$^2$ or "psi") and is proportional to the position of the motor in the converter 71, which in turn is proportional to the electrical signal supplied to the motor.

Referring to Figure 3, the motor of the converter 71 is shown at 140. This can be a reversible *dc* servomotor. A shaft of the motor 140 is connected to a gear assembly 142 which includes an output shaft 144 connected to a cam 146. The cam 146 faces an orifice of a nozzle 148. The nozzle 148 is connected to a spring biased bellows 150 having an input line 152 communicating with the interior of the bellows 150 as well as the interior of the nozzle 148. The line 80 for supplying a pneumatic gas at a control pressure is connected to the line 152. The lines 80 and 152 receive gas (generally air) at a constant low pressure of 151.7 kPa±13.8 kPa (22 lbf/in$^2$±2 lbf/in$^2$) from a regulator 154. The regulator 154 receives pressurised gas from the gas supply line 67 over the line 72.

The rotational position of the shaft 144 as controlled by the gear unit 142 is controlled ultimately by the shaft of the motor 140. The shaft of the motor 140 turns in one direction or in an opposite direction at a selected speed which is determined by the electrical power supply to terminals 158, 160, and 162 of the motor. The terminal 158 is connected to the raise line 76, the terminal 160 is connected to the lower line 78, and the terminal 162 is connected to the power line 74.

An important advantage of the above-described position transmitter results from its being integrally incorporated as a portion of an electro-pneumatic converter. (The prior art LVDT and RVDT transmitters are devices which must be installed separately). By eliminating the need to install a second device, a cost saving results from reduced field installation time and also from a lower parts count due to the use of no separate enclosures of mechanical linkages.

Another advantage is that the low power circuitry is simplified in comparison to that needed for LVDT and RVDT devices. Also, the minimal interaction between the zero and span adjustments is an improvement over older potentiometer designs. Thus, less calibration time is required for the present transmitter.

## Claims

1. A control system comprising:

an electro-pneumatic ·converter (71) having pneumatic means for providing a variable pneumatic signal;

a power supply (10);

a system controller (14) connected to the power supply (10) and connected to the electro-pneumatic converter (71) for controlling the converter; and

a position transmitter (8) connected to a movable member (24) for generating a signal corresponding to the position of the movable member (24), the system being characterised in that:

the system comprises an actuator device (22), said movable member (24) being a movable member of the actuator device;

an input line (12) of the position transmitter (8) is connected to one terminal of the power supply (10);

an output line (16) of the position transmitter is connected to another terminal of the power supply (10) via the system controller 14, which has a resistive load ($R_{LOAD}$);

the electro-pneumatic converter (71) is connected to receive power from the system controller (14) and is connected to apply said variable pneumatic signal to the actuator device (22) for controlling the actuator device; and

the position transmitter (8) comprises:

voltage divider means (30, 44, 46) connected between the input and output lines (12, 16) and having a movable contact (28) mechanically engaged or engageable with the movable member (24) of the actuator device (22) for carrying a voltage which varies with motion of the movable member (24),

a zero adjust amplifier (50) having an input connected to the movable contact (28) for receiving the voltage carried by the movable contact, the zero adjust amplifier (50) having an output and being connected to influence a current on the output line (16), and the zero adjust amplifier (50) also having an adjustable input, the movable contact (28) being movable to a zero position corresponding to a zero position of the movable member (24) and the adjustable input being adjusted or adjustable to apply a low selected current signal to the output line (16) which is indicative of a zero position of the movable member (24),

a span adjust amplifier (54) having an input connected to an output of the zero adjust amplifier (50), the span adjust amplifier (54) having an output and being connected to influence a current on the output line (16), the span adjust amplifier (54) also having an adjustable input, the movable contact (28) being movable to a maximum position corresponding to a maximum position of the movable member (24) and the adjustable input of the span adjust amplifier (54) being adjusted or adjustable to apply a high selected current signal to the output line (16) which is indicative of the maximum position of the movable member (24), and

a voltage-to-current stage (58, 60) connected between the input and output lines (12, 16) and connected to the output of the span adjust amplifier (54) for converting a voltage signal from the span adjust amplifier (54) to a current signal on the output line (16).

2. A system according to claim 1, wherein the voltage divider means comprises a potentiometer resistor (30) connected across the input and output lines (12, 16), the movable contact (28) comprising a wiper engaged with the potentiometer resistor (30), a first resistor (46) connected in the input line (12) and a second resistor connected in the output line (16).

3. A system according to claim 2, wherein said one terminal of the *dc* power supply (10) is a positive terminal and said other terminal of the power supply is a negative terminal, a first amplifier (48) has a positive input connected to the wiper (28), the zero adjust amplifier (50) has a negative input connected to an output of the first amplifier (50), a second potentiometer resistor (52) is connected across the input and output lines (12, 16), a second wiper is engaged with the second potentiometer resistor (52) and connected to a positive input of the zero adjust amplifier (50), the span adjust amplifier (54) has a negative input connected to the output of the zero adjust amplifier (50) and has a negative feedback line having a third potentiometer resistor (56) therein, a third wiper is engaged with the third potentiometer resistor (56) and connected to the negative feedback line whereby the zero adjust amplifier (50) has an adjustable input comprising the second potentiometer resistor (52) and wiper and the span adjust amplifier (54) has an adjustable input comprising the third potentiometer resistor (56) and wiper.

4. A system according to claim 3, wherein the voltage-to-current stage (58, 60) comprises a transistor (60) having an emitter and collector connected across the input and output lines (12, 16), and an amplifier (58) having a negative input connected to the output of the span adjust amplifier (54) and an output connected to a base of the transistor (60) for controlling the conductivity of the transistor to apply a variable current to the output line (16) with variations in voltage from the span adjust amplifier (54).

5. A system according to claim 4, including a first diode (32) connected between the positive terminal of the *dc* power supply (10) and the input line (12) for conducting current towards the input line (12), a second diode (36) connected between the output line (16) and the negative terminal of the *dc* power supply (10) for conducting current towards the negative terminal, and a third diode (34) connected between the transistor (60) and the output line (16) for conducting current from the transistor (60) to the output line (16), the first, second and third diodes (32, 36, 34) being for protecting against reverse current in the input and output lines (12, 16).

6. A system according to any one of claims 2 to 5, including a Zener diode (42) connected between the input and output lines (12, 16) adjacent the first and second resistors (44, 46) for limiting a voltage across the input and output lines (12, 16).

**Patentansprüche**

1. Steuersystem mit:

einem elektropneumatischen Umrichter (71) mit pneumatischen Mitteln zur Schaffung eines veränderlichen pneumatischen Signals;

einer Stromversorgung (10);

einer Systemsteuereinrichtung (14), welche mit der Stromversorgung (10) verbunden ist und mit dem elektropneumatischen Umrichter (71) verbunden ist zur Steuerung des Umrichters; und

einer Positionsumsetzeinrichtung (8), die mit einem bewegbaren Teils (24), verbunden ist zur Erzeugung eines Signals entsprechend der Position des bewegbaren Teils (24), wobei das System dadurch gekennzeichnet ist, daß;

das System ein Stellglied (22) aufweist, wobei das bewegbare Teil (24) ein bewegbares Teil des Stellgliedes ist;

eine Eingabeleitung (12) der Positionsumsetzeinrichtung (8) mit einem Anschluß der Stromsversorgung (10) verbunden ist;

eine Ausgabeleitung (16) der Positionsumsetzeinrichtung mit einem anderen Anschluß der Stromversorgung (10) über diese Systemsteuereinrichtung (14) verbunden ist, die eine ohmsche Belastung ($R_{LOAD}$) hat;

der elektropneumatische Umrichter (71) angeschlossen ist, um Energie von der Systemsteuereinrichtung (14) aufzunehmen, und angeschlossen ist, um das veränderliche pneumatische Signal auf das Stellglied (22) zur Steuerung desselben zu geben; und

die Positionsumsetzeinrichtung (8) aufweist:

Spannungsteilermittel (30, 44, 46), die zwischen der Eingangs- und Ausgangsleitung (12, 16) verbunden sind und einen bewegbaren Kontakt (28) haben, der mechanisch mit dem bewegbaren Teil (24) des Stellgliedes (22) in Eingriff steht oder in Eingriff bringbar ist zum Führen einer Spannung, die mit der Bewegung des bewegbaren Teils (24) variiert,

einen Nullenstellverstärker (50) mit einem Eingang, der mit dem bewegbaren Kontakt (28) verbunden ist zur Aufnahme der Spannung, die von dem bewegbaren Kontakt geführt wird,

wobei der Nulleinstellverstärker (50) einen Ausgang hat und angeschlossen ist, um einen Strom auf der Ausgangsleitung (16) zu beeinflussen, und der Nulleinstellverstärker (50) auch einen einstellbaren Eingang hat, wobei der bewegbare Kontakt (28) zu einer Nullposition bewegbar ist entsprechend einer Nullposition des bewegbaren Teils (24) und der einstellbare Eingang eingestellt wird oder einstellbar ist zum Aufbringen eines niedrigen ausgewählten Stromsignals zur Ausgangsleitung (16), wodurch eine Anzeige der Nullposition des bewegbaren Teils (24) gegeben ist,

einen Überbrückungseinstelverstärker (54) mit einem Eingang, der mit einem Ausgang des Nulleinstellverstärkers (50) verbunden ist, wobei der Überbrückungseinstellverstärker (54) einen Ausgang hat und angeschlossen ist, um einen Strom auf der Ausgangsleitung (16) zu beeinflussen, der Überbrückungseinstellverstärker (54) auch einen einstellbaren Eingang hat, wobei der bewegbare Kontakt (28) zu einer Maximalposition bewegbar ist entsprechend einer Maximalposition des bewegbaren Teils (24) und der einstellbare Eingang des Überbrückungseinstellverstärkers (54) eingestellt ist oder einstellbar ist zum Aufbringen eines hohen ausgewählten Stromsignals auf die Ausgangsleitung (16), wodurch die Maximalposition des bewegbaren Teils (14) angezeigt ist, und

eine Spannungs- Strom- Stufe (58, 60), die zwischen der Eingangs- und Ausgangsleitung (12, 16) verbunden und mit dem Ausgang des Überbrückungseinstellverstärkers (54) verbunden ist zum Umrichten eines Spannungssignals aus dem Überbrückungseinstellverstärker (54) auf ein Stromsignal auf der Ausgangsleitung (16).

2. System nach Anspruch 1, wobei das Spannungsteilermittel einen Potentiometerwiderstand (30) aufweist, der über die Ausgangs- und Eingangsleitung (12, 16) angeschlossen ist, wobei der bewegbare Kontakt (28) einen Kontaktarm aufweist, der mit dem Potentiometerwiderstand (30) in Eingriff ist, und wobei ein erster Widerstand (46) in der Eingangsleitung (12) und ein zweiter Widerstand in der Ausgangsleitung (16) verbunden sind.

3. System nach Anspruch 2, wobei der eine Anschluß der Gleichstromenergieversorgung (10) ein positiver Anschluß ist und der andere Anschluß der Energieversorgung ein negativer Anschluß ist, ein erster Verstärker (48) einen positiven Eingang hat, der mit dem Kontaktarm (28) verbunden ist, der Nulleinstellverstärker (50) einen negativen Eingang hat, der mit einem Ausgang des ersten Verstärkers (50) verbunden ist, ein zweiter Potentiometerwiderstand (52) über die Eingangs- und Ausgangsleitung (12, 16) verbunden ist, ein zweiter Kontaktarm mit dem zweiten Potentiometerwiderstand (52) in Eingriff und mit einem positiven Eingang des Nulleinstellverstärkers (50) verbunden ist, der Überbrückungseinstellverstärker (54) einen negativen Eingang hat, der mit dem Ausgang des Nulleinstellverstärkers (50) verbunden ist, und eine negative Rückkupplungsleitung hat mit einem darin befindlichen dritten Potentiometerwiderstand (56), ein dritter Kontaktarm mit dem dritten Potentiometerwiderstand (56) in Eingriff ist und mit der negativen Rückkopplungsleitung verbunden ist, wodurch der Nulleinstellverstärker (50) einen einstellbaren Eingang hat mit dem zweiten Potentiometerverstärker (52) und einem Kontaktarm und wobei der Überbrückungseinstellverstärker (54) einen einswellbaren Eingang hat mit dem dritten Potentiometerwiderstand (56) und einem Kontaktarm.

4. System nach Anspruch 3, wobei die Spannungs- Strom- Stufe (58, 60) einen Transistor (6) aufweist mit einem Emitter und Kollektor, die über die Eingangs- und Ausgangsleitungen (12, 16) verbunden sind, und einen Verstärker (58) aufweist mit einem negativen Eingang, der mit dem Ausgang des Überbrückungseinstellverstärkers (54) verbunden ist, und einem Ausgang, der mit einer Basis des Transistors (60) verbunden ist zur Steuerung der Leitfähigkeit des Transistors, um einen veränderlichen Strom auf die Ausgangsleitung (16) mit Spannungsveränderungen aus dem Überbrückungseinstellverstärker (54) aufbringen.

5. System nach Anspruch 4, mit einer ersten Diode (32), die zwischen dem positiven Anschluß der Gleichstromversorgung (10) und der Eingangsleitung (12) verbunden ist zum Leiten von Strom zur Eingangsleitung (12) hin, einer zweiten Diode (36), die zwischen der Ausgangsleitung (16) und dem negative Anschluß der Gleichstromsversorgung (10) verbunden ist zum Leiten von Strom zum negativen Anschluß hin, und einer dritten Diode (34), die zwischen dem Transistor (60) und der Ausgangsleitung (16) verbunden ist zum Leiten von Strom aus dem Transistor (60) zur Ausgangsleitung (16), obei die erste, zweite und dritte Diode (32, 36, 34) zum Schutz gegen den Gegenstrom in der Eingangs- und Ausgangsleitung (12, 16) vorgesehen sind.

6. System nach einem der Ansprüche 2 bis 5, mit einer Zenerdiode (42), die zwischen den Eingangs- und Ausgangsleitungen (12, 16) neben den ersten und zweiten Widerständen (44, 46) verbunden sind zur Begrenzung einer Spannung über die Eingangs- und Ausgangsleitungen (12, 16).

## Revendications

1. Système de commande comportant:

un convertisseur électro-pneumatique (71) possédant des moyens pneumatiques en vue de délivrer un signal pneumatique variable;

une alimentation (10);

un contrôleur de système (14) relié à l'alimentation (10) et relié au convertisseur électro-pneumatique (71) en vue de commander le convertisseur; et

un transmetteur de position (8) relié à un élément mobile (24) en vue d'engendrer un signal correspondant à la position de l'élément mobile (24), le système étant caractérisé en ce que;

il comporte un disipositif de manoeuvre (22), ledit élément mobile (24) étant un élément mobile du dispositif de manoeuvre;

un fil d'entrée (12) du transmetteur de position (8) est relié à une borne de l'alimentation (10);

un fil de sortie (16) du transmetteur de position est reliée à une autre borne de l'alimentation (10) par l'intermédiaire du contrôleur de système (14), qui possède une charge résistive ($R_{CHARGE}$);

le convertisseur électro-pneumatique (71) est raccordé pour recevoir de l'énergie du contrôleur de système (14) et est raccordé pour appliquer ledit signal pneumatique variable au dispositif de manoeuvre (22) pour commander le dispositif de manoeuvre; et

le transmetteur de position (8) comporte:

des moyens diviseurs de tension (30, 44, 46) connectés entre les fils d'entrée et de sortie (12, 16) et possédant un contact mobile (28) en contact ou pouvant venir en contact mécaniquement de l'élément mobile (24) du dispositif de manoeuvre (22) pour véhiculer une tension variant avec un déplacement de l'élément mobile (24),

un amplificateur de réglage de zéro (50) possédant une entrée reliée au contact mobile (28) en vue de recevoir la tension véhiculée par le contact mobile, l'amplificateur de réglage de zéro (50) possédant une sortie et étant raccordé pour influencer un courant sur le fil de sortie (16), et l'amplificateur de réglage de zéro (50) possédant également une entrée réglable, le contact mobile (28) étant déplaçable dans une position zéro correspondant à une position zéo de l'élément mobile (24) et l'entrée réglable étant réglée ou pouvant être réglée pour appliquer un signal de courant choisi faible au fil de sortie (16) qui est représentatif d'une position zéro de l'élément mobile (24),

un amplificateur de réglage de plage (54) possédant une entrée reliée à une sortie de l'amplificateur de réglage de zéro (50), l'amplificateur de réglage de plage (54) possédant une sortie et étant connecté pour influencer un courant sur le fil de sortie (16), l'amplificateur de réglage de plage (54) possédant également une entrée réglable, le contact mobile (28) étant déplaçable jusqu'à une position maximale correspondant à une position maximale de l'élément mobile (24) et l'entrée réglable de l'amplificateur de réglage de plage (54) étant réglée ou pouvant être réglée pour appliquer un signal de courant choisi élevée au fil de sortie (16) qui est représentatif de la position maximale de l'élément mobile (24), et

un étage tension-courant (58, 60) connectée entre les fils d'entrée et de sortie (12, 16) et relié à la sortie de l'amplificateur de réglage de plage (54) en vue de convertir un signal de tension provenant de l'amplificateur de réglage de plage (54) en un signal de courant sur le fil de sortir (16).

2. Système selon la revendication 1, dans lequel les moyens diviseurs de tension comportent une résistance potentiomètre (30) connectée entre les fils d'entrée et de sortie (12, 16), le contact mobile (28) comportant un curseur en contact avec la résistance potentiomètre (30), une première résistance (46) montée dans le fil d'entrée (12) et une seconde résistance montée dans le fil de sortie (16).

3. Système selon la revendication 2, dans lequel ladite première borne de l'alimentation continue (10) est une borne positive et ladite autre borne de l'alimentation est une borne négative, un premier amplificateur (48) possède une entrée positive reliée au curseur (28), l'amplificateur de réglage de zéro (50) possède une entrée négative reliée à une sortie du premier amplificateur (50), une seconde résistance potentiomètre (52) est connectée entre les fils d'entrée et de sortie (12, 16), un second curseur est en contact de la seconde résistance potentiomètre (52) et reliée à une entrée positive de l'amplificateur de réglage de zéro (50), l'amplificateur de réglage de plage (54) possède une entrée négative reliée à la sortie de l'amplificateur de réglage de zéro (50) et possède un fil de contre-réaction contenant une troisième résistance potentiomètre (56), un troisième curseur est en contact avec la troisième résistance potentiomètre (56) et reliée au fil de rétroaction négative de telle sorte que l'amplificateur de réglage de zéro (50) possède une entrée réglable comportant la seconde résistance potentiomètre (52) et le second curseur et l'amplificateur de réglage de plage (54) possède une entrée réglable comportant la troisième résistance potentiomètre (56) et le troisième curseur.

4. Système selon la revendication 3, dans lequel l'étage courant-tension (58, 60) comporte un transistor (60) possédant un émetteur et un collecteur connectés entre les fils d'entrée et de sortie (12, 16), et un amplificateur (58) possédant une entrée négative reliée à la sortie de l'amplificateur de réglage de plage (54) et une sortie connectée à une base du transistor (60) pour commander la conduction du transistor en vue d'appliquer un courant variable au fil de sortie (16) dû à des variations de tension provenant de l'amplificateur de réglage de plage (54).

5. Système selon la revendication 4, comprenant une première diode (32) connectée entre la borne positive de l'alimentation continue (10) et le fil d'entrée (12) pour acheminer un courant vers le fil d'entrée (12), une seconde diode (36) connectée entre le fil de sortie (16) et la borne négative de l'alimentation continue (10) en vue d'acheminer un courant vers la borne négative, et une troisième diode (34) connectée entre le transistor (60) et le fil de sortie (16) en vue d'acheminer un courant depuis le transistor (60) vers fil de sortie (16), les première, seconde et troisième diodes (32, 36, 34) ayant un rôle de protection contre un courant inverse dans les fils d'entrée et de sortie (12, 16).

6. Système selon l'une quelconque des revendications 2 à 5, comprenant une diode Zener (42) connectée entre les fils d'entrée et de sortie (12, 16) adjacente aux première et seconde résistances (44, 46) en vue de limiter une tension aux bornes des fils d'entrée et de sortie (12, 16).

FIG.1A

FIG.1B

EP 0 174 748 B1

EP 0 174 748 B1

TO FINAL CONTROL ELEMENT 69

FROM FINAL CONTROL ELEMENT 69

66

PNEUMATIC SUPPLY

67

ACTUATOR 22  25  24

+24 VDC 74
FROM SYSTEM CONTROLLER 14
RAISE
LOWER
76  78

72  71  80
M/P CONVERTER

26

FROM POWER SUPPLY 10  +24 VDC  18

TO SYSTEM CONTROLLER 14  4-20mA  20

POSITION TRANSMITTER  8

30
2KΩ POT.

FIG.2

FIG.3

TO ACTUATOR 22

140  142  146  150  80  FROM GAS SUPPLY LINE 67

M  R

162  144  148  152  154
158  160

76  78
74  FROM CONTROLLER 14

2